# EUROPÄISCHE PATENTSCHRIFT

(11) **EP 1 360 941 B1**
(45) Veröffentlichungstag und Bekanntmachung des Hinweises auf die Patenterteilung: **16.06.2010**
(21) Anmeldenummer: 03009088.0
(22) Anmeldetag: 19.04.2003
(51) Int. Cl.: A61C 7/00, A61C 7/10

(54) **Zahnspange**
Dental appliance
Appareil orthodontique

(30) Priorität: 10.05.2002 DE 10221354
(43) Veröffentlichungstag der Anmeldung: 12.11.2003
(73) Patentinhaber: Weissbach Otte, Klaus, 55566 Bad Sobernheim (DE)
(72) Erfinder: Weissbach Otte, Klaus, 55566 Bad Sobernheim (DE)
(74) Vertreter: Grommes, Karl F.

(56) Entgegenhaltungen:
- EP-A- 0 509 709
- WO-A-96/23452
- DE-A- 19 712 791
- DE-B- 1 281 105
- US-A- 5 092 768
- US-A- 5 785 520
- US-B1- 6 220 856
- US-B1- 6 358 255

## Beschreibung

### Technisches Gebiet

Die Erfindung betrifft eine Zahnspange zur Distalisation der auf der linken und rechten Seite des Unterkiefers angeordneten hinteren Backenzähne eines Patienten.

Derartige Zahnspangen zur Distalisation, d.h. zum Zurückschieben eines oder auch mehrerer Zähne, um Platz zu schaffen für eine geordnete Ausrichtung der übrigen Zähne, sind bekannt. Dabei sollen durch die Zahnspangen regelmäßig die hinteren Backenzähne (Molaren) nach hinten bewegt werden.

Eine bekannte Zahnspange besteht aus einem hufeisenförmigen Grundkörper (sogenannte Schwarz'sche Platte), welcher der individuellen Kieferform angepaßt ist. Im Grundkörper sind Drahtklammern verankert, von denen zwei die zu bewegenden Molaren umfassen und von denen die restlichen an den davor sitzenden Zähnen angreifen. Der Grundkörper (mit den davon ausgehenden Drahtklammern) ist vor den Molaren geteilt, wobei die den Molaren zugeordneten Abschnitte mit dem verbleibenden Hauptabschnitt über Führungsstifte sowie über eine Verstellschraube verbunden und relativ zueinander verstellbar sind. Über die Verstellschrauben kann der Druck auf die Molaren nach Bedarf variiert werden.

Bekannte Unterkieferzahnspangen sind auch in den Dokumenten DE 197 12 791 A und US 6 220 856 B offenbart.

Bekannt geworden ist ferner eine spangenartige Vorrichtung, die als Lipbumper bezeichnet wird und bei der ein vor den Vorderzähnen verlaufendes und an den Molaren über Bänder gehaltenes "Lippenschild" von der Lippe des jeweiligen Patienten unter Druck genommen wird (vgl. DE 1 281 105 B). Der nach hinten - unter Zwischenschaltung einer Feder - wirkende Druck dient der Korrektur der Molaren. Damit handelt es sich - wie schon die Bezeichnung es richtig ausweist - um eine rein orthodontische Vorrichtung oder Apparatur.

Ferner sind speziell für den Oberkiefer entwickelte feste Zahnspangen bekannt (sogenannte "Distal Jets"), bei denen eine Kunststoffplatte zum Anliegen am Gaumenbereich vorgesehen ist. Die Kunststoffplatte stellt sowohl ein Abstützelement als auch ein Verbindungselement dar, an das die von den Bändern ausgehenden Drahtabschnitte angeschlossen sind. Da der Mundboden im Unterkiefer beweglich und somit nicht belastbar ist, außerdem das Zungenband diesen Bereich unterteilt, ist eine solche Vorrichtung im Unterkiefer nicht anwendbar.

Schließlich sind auch für den Bereich des Unterkiefers noch Korrektureinrichtungen anderer Art bekannt, nämlich solche, die im Mundvorhof (Backenbereich) einsetzbar sind. Diese bewirken in der Regel dort aber nur eine einseitige Korrektur der Zähne.

### Darstellung der Erfindung

Der Erfindung liegt die Aufgabe zugrunde, eine Zahnspange vorzuschlagen, welche über einen längeren Zeitraum tragbar sowie individuell nachstellbar und im Ergebnis effizienter ist als vergleichbare bekannte Zahnspangen.

Diese Aufgabe wird erfindungsgemäß durch die Merkmale des Anspruchs 1 gelöst. Weitere vorteilhafte Ausgestaltungen der Erfindung offenbaren die Unteransprüche.

Der Erfindung liegt der Gedanke zugrunde, dass der Patient möglichst wenig Veranlassung erhalten soll, die Zahnspange herauszunehmen und ständig in ihrem Sitz zu verändern. Die Erfindung schlägt daher eine feste Zahnspange vor, bei welcher zur Abstützung die vor den Molaren befindlichen Milchmolaren oder Praemolaren herangezogen werden.

Die Praemolaren oder Milchmolaren werden nicht mit Drahtklammern, sondern mit kieferorthopädischen Bändern (d.h. mit relativ breiten Metallringen) umgeben und sind über einen hinter den Schneidzähnen verlaufenden Drahtbügel (Lingualbügel) miteinander verbunden. Letzterer dient gegebenenfalls auch der Abstützung. Die Molaren sind ebenfalls von kieferorthopädischen Bändern umfaßt. Von den Bändern der Molaren sowie den Bändern der Praemolaren bzw. Milchmolaren oder aber deren gemeinsamen Verbindungsbügel gehen aufeinander zugerichtete Drahtabschnitte aus, welche über Verbindungs- und Spannelemente verbindbar sowie individuell aktivierbar sind. Bei den Verbindungs- und Spannelementen handelt es sich insbesondere um sogenannte Schraubschlösser.

Außerdem können vorspannbare Federn zwischengeschaltet sein. Letztere können jeweils vorzugsweise von einer Hülse umgeben sein und darin geführt werden. Ferner soll ein Lippenschild mit den kieferorthopädischen Bändern der Molaren verbunden sein, um die Molaren nach hinten zu drücken. Das Lippenschild kann auch mit den Praemolaren oder Milchmolaren vor den zu bewegenden Molaren verbunden sein, um eine bessere Abstützung zu erhalten.

Die erfindungsgemäße Zahnspange weist unter anderem den Vorteil auf, dass sie kontinuierlich getragen werden kann. Dadurch ist die Einwirkungsdauer größer und das Fortwirken einer getroffenen Einstellung hält länger an. Die Behandlung kann zügig und kontrolliert durchgeführt werden.

Statt einer kippenden findet bei der erfindungsgemäßen Zahnspange eher eine schiebende Bewegung der Molaren statt, was noch dadurch unterstützt werden kann, dass der Angriffspunkt der Drahtbügel an den kieferorthopädischen Bändern der vorderen Backenzähne etwa im mittleren Abschnitt der Bänder liegt und die Verbindungs- und Spannelemente zwischen den benachbarten vorderen und hinteren kieferorthopädischen Bändern unterhalb des Zahnfleischrandes verlaufen. Damit befindet sich der Kraftangriffspunkt im oberen Drittel des gesamten Zahnes inklusive der Wurzel, was dem geometrischen Widerstandszentrum entspricht.

### Kurze Beschreibung der Zeichnungen

Weitere Einzelheiten und Vorteile der Erfindung ergeben sich aus den folgenden anhand von Figuren erläuterten Ausführungsbeispielen. Es zeigen:
- Fig. 1: schematisch eine Draufsicht auf die Zähne eines Unterkiefers mit eingesetzter erfindungsgemäßer Zahnspange bei einem Unterkiefer mit abgeschlossenem Zahnwechsel,
- Fig. 2: eine vergrößerte Ansicht des in Fig.1 mit II bezeichneten Bereiches im Schnitt,
- Fig. 2a: eine Ansicht entsprechend der Fig. 2 für eine etwas andere Ausführungsform.

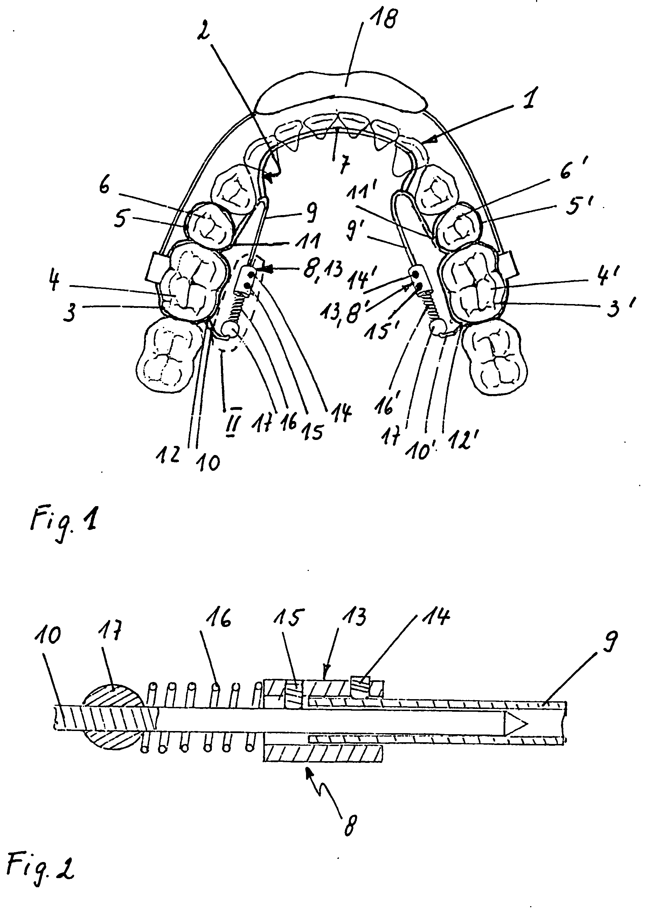

In Fig.1 sind mit 1 das Gebiß eines Unterkiefers und mit 2 eine erfindungsgemäße Zahnspange bezeichnet. Die Zahnspange 2 umfaßt zwei hintere kieferorthopädische Bänder 3, 3', die jeweils auf die ersten Molaren 4, 4' des Gebisses 1 aufgeschoben sind, und zwei vordere kieferorthopädische Bänder 5, 5', welche jeweils auf die zweiten Praemolaren 6, 6' oder zweiten Milchmolaren des Gebisses 1 aufgeschoben sind. Die beiden vorderen kieferorthopädischen Bänder 3, 3' sind über einen hinter den Schneidzähnen angeordneten Drahtbügel 7 miteinander verbunden.

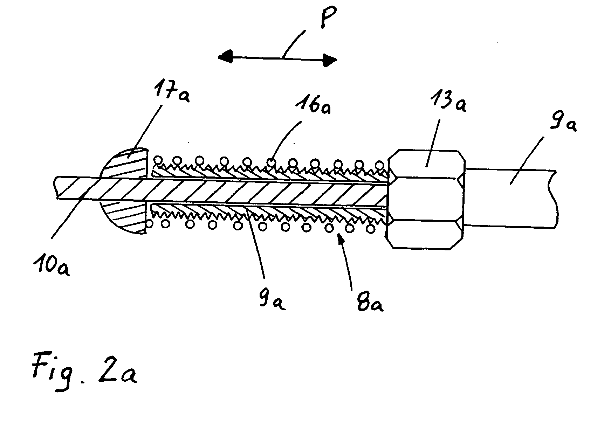

Die jeweils benachbarten hinteren und vorderen kieferorthopädischen Bänder 3 und 5 bzw. 3' und 5' sind auf jeder Seite des Unterkiefers über Verbindungs- und Spannelemente 8, 8' miteinander verbunden. Bei diesen Verbindungs- und Spannelementen 8, 8' handelt es sich um federbelastete Teleskopanordnungen mit jeweils zwei ineinander verschiebbaren Stangen 9, 10 bzw. 9', 10' (Fig.2). Dabei ist die erste der beiden Stangen 9, 9' als Rohr ausgebildet, in welches die zweite Stange 10, 10' mindestens teilweise einschiebbar ist. Die einander abgewandten Enden 11, 12 bzw. 11', 12' (Fig.1) der beiden Stangen 9, 10 bzw. 9', 10' sind jeweils mit einem der benachbarten kieferorthopädischen Bänder 3 und 5 bzw. 3' und 5' kraftschlüssig verbunden (z.B. verlötet).

Außerdem umfaßt das jeweilige Verbindungs- und Spannelement 8, 8' ein rohrförmiges Befestigungselement 13, 13', welches einen Durchmesser aufweist, der größer ist als der Durchmesser der rohrförmigen ersten Stange 9, 9'. Das jeweilige Befestigungselement 13, 13' weist zwei axial hintereinander angeordnete Schrauben 14, 15 bzw. 14', 15' auf, die von außen nach innen in die Wand des Befestigungselementes 13, 13' eingeschraubt werden können und mit denen die beiden Stangen 9, 10 bzw. 9', 10' in ihren Endstellungen mit dem rohrförmigen Befestigungselement 13, 13' verbindbar und damit in bezug zueinander fixierbar sind.

Das jeweilige Verbindungs- und Spannelement 8, 8' enthält schließlich eine Zylinderfeder 16, 16', die sich einerseits am Rand des rohrförmigen Befestigungselementes 13, 13' und andererseits an einem Wulst 17, 17' der zweiten Stange 10, 10' abstützt. Durch diese Zylinderfeder 16, 16' wird erreicht, dass bei Lösen der die zweite Stange 10, 10' fixierenden zweiten Schraube 15, 15' ständig ein Druck auf die ersten Molaren ausgeübt wird.

Die Zahnspange 2 kann daher zunächst ohne Fixierung der zweiten Stange 10, 10' an dem Befestigungselement 13, 13' von dem Patienten getragen werden und erst nach einem vorgegebenen Zeitraum, wenn sich die ersten Molaren 4, 4' um einen vorgegebenen Weg nach hinten verschoben haben, in dieser Stellung fixiert werden. Damit kann dann ein ungewolltes Rückstellen jener Zähne verhindert werden.

Wie aus Fig.1 zu entnehmen ist, weist die Zahnspange 2 ein an sich bekanntes Lippenschild 18 auf, welches mit den kieferorthopädischen Bändern 3, 3' der Molaren 4, 4' verbunden ist, um auf diese zusätzlich einzuwirken.

Die in Fig. 2a dargestellte Ausführungsform eines Verbindungs- und Spannelementes 8a beinhaltet ebenfalls eine Teleskopstangenanordnung, wobei wiederum eine erste (äußere) Stange 9a als Führung für eine zweite (innere) Stange 10a dient. Beide Stangen 9a, 10a stützen sich mit ihren einander abgewandten Enden (nicht dargestellt) an verschiedenen Backenzähnen ab. Die erste Stange 9a ist an ihrem der zweiten Stange 10a zugewandten (vorderen) Ende mit einem Außengewinde versehen, auf dem eine Schraubmutter 13a in Richtung auf das vordere Ende der Stange 9a und davon wieder zurück - wie mit dem Doppelpfeil P versinnbildlicht - verstellt werden kann. Die zweite Stange 10a trägt im Abstand von ihrem vorderen Ende einen festsitzenden Wulst 17a, hier in Form einer Halbkugel.

Über dem vorderen Ende der ersten Stange 9a ist im übrigen eine zylinderförmige Feder 16a beweglich angeordnet, für die einerseits die Schraubmutter 13a und andererseits der Wulst 17a einen Anschlag bilden. Durch Annäherung der Schraubmutter 13a an den Wulst 17a gerät die Feder 16a immer stärker unter Druck, wodurch letztlich an den Backenzähnen immer stärkere Verstellkräfte im Sinne der gewünschten Korrektur der fehlerhaften Zahnstellung wirksam werden.

Diese Ausführungsform eines Verbindungs- und Spannelementes zeichnet sich durch besonders einfache und sichere Handhabung beim Einund Nachstellen aus. Statt einfacher Schraubmuttern können auch solche in selbstsichernder Ausführungsform verwendet werden, womit ein ungewolltes Nachgeben der Schraubmutter (aus ihrer gewählten Stellung) wirksam vermieden werden kann. Schließlich sind mit dieser Ausführungsform auch besonders kleine Baueinheiten möglich.

### Bezugszeichenliste

- 1: Gebiß
- 2: Zahnspange
- 3,3': Bänder
- 4,4': Molaren, hintere Backenzähne
- 5,5': Bänder
- 6,6': Praemolaren, vordere Backenzähne
- 7: Drahtbügel
- 8,8',8a: Verbindungs- und Spannelemente
- 9,9',9a: erste Stange
- 10,10',10a: zweite Stange
- 11,11': Enden
- 12,12': Enden
- 13,13': Befestigungselemente
- 13a: Schraubmutter
- 14,14': erste Schrauben
- 15,15': zweite Schrauben
- 16,16',16a: Zylinderfeder
- 17,17',17a: Wulst
- 18: Lippenschild
- P: Doppelpfeil

## Patentansprüche

1. Zahnspange zur Distalisation der auf der linken und rechten Seite des Unterkiefers angeordneten hinteren Backenzähne (4, 4') eines Patienten mit den Merkmalen:
a) die Zahnspange (2) umfaßt sowohl zwei auf die hinteren Backenzähne (4, 4') als auch zwei auf vordere Backenzähne (6, 6') aufschiebbare hintere und vordere kieferorthopädische Bänder (3, 3', 5, 5');
b) die beiden vorderen kieferorthopädischen Bänder (5, 5') sind über einen, bei der bestimmungsgemäßen Verwendung der Zahnspange (2), hinter den Schneidzähnen angeordneten Drahtbügel (7) miteinander verbunden;
c) die auf der linken und rechten Seite des Unterkiefers jeweils benachbarten hinteren und vorderen kieferorthopädischen Bänder (3, 5; 3', 5') sind über Verbindungs- und Spannelemente (8, 8', 8a) miteinander verbunden;
**dadurch gekennzeichnet, dass**
d) an die beiden hinteren kieferorthopädischen Bänder (3, 3') oder an die beiden vorderen kieferorthopädischen Bänder (5, 5') zusatzlich ein Lippenschild (18) angeschlossen ist.

2. Zahnspange nach Anspruch 1, **dadurch gekennzeichnet, dass** die hinteren und vorderen kieferorthopädischen Bänder (3, 5; 3', 5') der jeweiligen Seite des Unterkiefers derart angeordnet sind, dass sie auf unmittelbar benachbarte Backenzähne (4, 6; 4', 6') aufschiebbar sind.

3. Zahnspange nach Anspruch 1 oder 2, **dadurch gekennzeichnet, dass** das Verbindungs- und Spannelement (8, 8', 8a) eine Teleskopstangenanordnung mit zwei ineinander verschiebbar angeordneten Stangen (9, 10; 9', 10'; 9a, 10a) umfasst, wobei die einander abgewandten Enden (11, 12; 11', 12')" der beiden Standen (9, 10; 9', 10'; 9a, 10a) jeweils mit einem der benachbarten kieferorthopädischen Bänder (3, 5; 3', 5') kraftschlüssig verbunden sind.

4. Zahnspange nach Anspruch 3, **dadurch gekennzeichnet, dass** es sich bei dem Verbindungs- und Spannelement (8, 8', 8a) um eine federbelastete Teleskopstangenanordnung handelt.

5. Zahnspange nach einem der Ansprüche 1 bis 4, **dadurch gekennzeichnet, dass** das Verbindungs- und Spannelement (8, 8') außerdem ein rohrförmiges Befestigungselement (13, 13') umfasst, durch welches die beiden Stangen (9, 10; 9', 10') hindurchführbar sind, und dass in der rohrförmigen Wand des Befestigungselementes (13, 13') axial hintereinander mindestens zwei radial von außen nach innen schraubbare Schrauben (14, 15; 14', 15') vorgesehen sind, mit denen die beiden Stangen (9, 10; 9', 10') in einer vorgegebenen Endstellung fixierbar sind.

6. Zahnspange nach einem der Ansprüche 1 bis 4, **dadurch gekennzeichnet, dass** es sich bei dem Verbindungs- und Spannelement (8a) um ein sogenanntes Schraubschloss handelt, welches derart gebildet ist, dass die erste Stange (9a) an ihrem der zweiten Stange (10a) zugewandten vorderen Ende mit einem Außengewinde versehen ist, auf dem eine Schraubmutter (13a) in Richtung auf das vordere Ende der Stange (9a) hin und davon wieder zurück verstellbar ist, und dass über dem vorderen Ende der ersten Stange (9a) eine zylinderförmige Feder (16a) beweglich angeordnet ist, für die einerseits die Schraubenmutter (13a) und andererseits ein Wulst (17a) auf der zweiten Stange (10a) einen Anschlag bilden.

7. Zahnspange nach einem der Ansprüche 1 bis 6, **dadurch gekennzeichnet, dass** der jeweilige Angriffspunkt des Drahtbügels (7) an den vorderen kieferorthopädischen Bändern (5, 5') etwa im mittleren Abschnitt dieser Bänder (5, 5') liegt.

8. Zahnspange nach einem der Ansprüche 1 bis 7, **dadurch gekennzeichnet, dass** die Verbindungs- und Spannelemente (8, 8', 8a) zwischen den benachbarten hinteren und vorderen kieferorthopädischen Bändern (3, 5; 3', 5') unterhalb dieser Bänder, vorzugsweise unterhalb des Zahnfleischrandes, angeordnet sind.

## Claims

1. Dental brace for the distalisation of the back molars (4, 4') of a patient, arranged on the left and right sides of the lower jaw, having the following features:
a) the dental brace (2) comprises two back and two front orthodontic collars (3, 3', 5, 5') that can be slipped onto the back molars (4, 4') and the front molars (6, 6'), respectively;
b) the two front orthodontic collars (5, 5') are joined together via an arch wire (7) that in the intended use of the dental brace (2) is arranged behind the incisors,
c) the adjacent back and front orthodontic collars (3, 5; 3', 5') on the left and right sides of the lower jaw, respectively, are connected to one another via connection and tension elements (8, 8', 8a),
**characterised in that**
d) a lip shield (18) is additionally connected to the two back orthodontic collars (3, 3') or to the two front orthodontic collars (5, 5').

2. Dental brace according to claim 1, **characterised in that** the back and front orthodontic collars (3, 5; 3', 5') of the respective side of the lower jaw are arranged such that they can be slipped onto immediately adjacent molars (4, 6; 4' 6').

3. Dental brace according to claim 1 or 2, **characterised in that** the connection and tension element (8, 8', 8a) comprises a telescoping rod assembly with two rods (9, 10; 9', 10'; 9a, 10a) that are displaceable inside one another, wherein the ends (11, 12; 11', 12') remote from one another of the two rods (9, 10; 9', 10'; 9a, 10a) are each connected by non-positive engagement to one of the adjacent orthodontic collars (3, 5; 3', 5').

4. Dental brace according to claim 3, **characterised in that** the connection and tension element (8, 8', 8a) is a spring-loaded telescoping rod assembly.

5. Dental brace according to any one of claims 1 to 4, **characterised in that** the connection and tension element (8, 8') furthermore comprises a tubular fastening element (13, 13'), through which the two rods (9, 10; 9', 10') can be passed, and **in that** in the tubular wall of the fastening element (13, 13'), at least two screws (14, 15; 14', 15') that can be screwed radially from the outside inward are provided axially in succession, with which screws the two rods (9, 10; 9', 10') can be fixed in a predetermined final position.

6. Dental brace according to any one of claims 1 to 4, **characterised in that** the connection and tension element (8a) is a so-called screw bracket, which is formed such that the first rod (9a), on its front end facing the second rod (10a), is provided with a male thread, on which a screw nut (13a) is adjustable toward the front end of the rod (9a) and back from it again, and that a cylindrical spring (16a), for which the screw nut (13a), on the one hand, and a bead (17a) on the second rod (10a), on the other hand, form a stop, is movably arranged above the front end of the first rod (9a).

7. Dental brace according to any one of claims 1 to 6, **characterised in that** the respective point of engagement of the arch wire (7) with the front orthodontic collars (5, 5') is located approximately in the middle portion of these collars (5, 5').

8. Dental brace according to any one of claims 1 to 7, **characterised in that** the connection and tension elements (8, 8', 8a) between the adjacent back and front orthodontic collars (3, 5; 3', 5') are arranged below these collars, preferably below the edge of the gum.

## Revendications

1. Appareil orthodontique, pour la distalisation des arrières molaires (4, 4'), disposées sur le côté gauche et droit de la mâchoire inférieure, d'un patient, présentant les caractéristiques ci-après :
a) l'appareil orthodontique (2) comprend tant deux bandes orthodontiques arrière (3, 3') susceptibles d'être enfilées sur les arrières molaires (4, 4') qu'également deux bandes orthodontiques avant (5, 5') susceptibles d'être enfilées sur les molaires avant (6, 6') ;
b) les deux bandes orthodontiques avant (5, 5') sont reliées ensemble par l'intermédiaire d'un arceau en fil (7) disposé derrière les incisives lorsque l'appareil orthodontique (2) est utilisé de façon conforme ;
c) les bandes orthodontiques avant et arrière (3, 5 ; 3', 5') chaque fois voisines, sur le côté gauche et sur le côté doit de la mâchoire inférieure, sont reliées ensemble par l'intermédiaire d'éléments de liaison et de serrage (8, 8', 8a) ;
**caractérisé en ce qu'**
d) un boulier labial (18) est en plus raccordé aux deux bandes orthodontiques arrière (3, 3') ou aux deux bandes orthodontiques avant (5, 5').

2. Appareil orthodontique selon la revendication 1, **caractérisé en ce que** les bandes orthodontiques avant et arrière (3, 5 ; 3', 5') du côté respectif de la mâchoire inférieure sont disposées de manière qu'elles puissent être enfilées sur des molaires (4, 6 ; 4', 6') directement voisines.

3. Appareil orthodontique selon la revendication 1 ou 2, **caractérisé en ce que** l'élément de liaison et de serrage (8, 8', 8a) comprend un agencement à tiges télescopiques avec deux tiges (9, 10 ; 9' ; 10' ; 9a, 10a) déplaçables l'une dans l'autre, les extrémités (11, 12 ; 11',12') opposées les unes aux autres des deux tiges (9, 10 ; 9' ; 10' ; 9a, 10a) étant reliées, par une liaison à interaction de forces, à l'une des bandes orthodontiques (3, 5 ; 3', 5') voisines.

4. Appareil orthodontique selon la revendication 3, **caractérisé en ce que**, concernant l'élément de liaison et de serrage (8, 8', 8a), il s'agit d'un agencement à tiges télescopiques sollicité élastiquement.

5. Appareil orthodontique selon l'une des revendications 1 à 4, **caractérisé en ce que** l'élément de liaison et de serrage (8, 8') comprend en outre un élément de fixation (13, 13") tubulaire, à travers lequel les deux tiges (9, 10 ; 9' ; 10') sont susceptibles d'être passées, et **en ce que**, dans la paroi tubulaire de l'élément de fixation (13, 13"), sont prévues, axialement l'une derrière l'autre, au moins deux vis (14 ; 15 ; 14', 15'), susceptibles d'être vissées radialement de l'extérieur vers l'intérieur, à l'aide desquelles les deux tiges (9, 10 ; 9' ; 10') sont susceptibles d'être fixées en une position finale prédéterminée.

6. Appareil orthodontique selon l'une des revendications 1 à 4, **caractérisé en ce que**, concernant l'élément de liaison et de serrage (8a), il s'agit de ce que l'on appelle une fermeture à vis, formée de manière que la première tige (9a) soit munie, sur son extrémité avant, tournée vers la deuxième tige (10a), d'un filetage extérieur, sur lequel un écrou fileté (13a) est manoeuvrable, en direction de l'extrémité avant de la tige (9a) et, de là, dans le sens inverse, et **en ce que**, sur l'extrémité avant de la première tige (9a), est disposé, de manière mobile, un ressort (16a) en forme de cylindre, pour lequel, d'une part, l'écrou fileté (13a) et, d'autre part, un bourrelet (17a), situé sur la deuxième tige (10a), forment une butée.

7. Appareil orthodontique selon l'une des revendications 1 à 6, **caractérisé en ce que** le point de saisie respectif de l'arceau en fil (7) sur les bandes orthodontiques avant (5, 5') est situé à peu près dans le tronçon médian de ces bandes (5, 5').

8. Appareil orthodontique selon l'une des revendications 1 à 7, **caractérisé en ce que** les éléments de liaison et de serrage (8, 8', 8a) sont disposés entre les bandes orthodontiques avant et arrière (3, 5 ; 3', 5') voisines, au-dessous de ces bandes, de préférence au-dessous du bord de la gencive.
